# EUROPÄISCHE PATENTANMELDUNG

(11) **EP 4 506 737 A1**
(43) Veröffentlichungstag der Anmeldung: **12.02.2025**
(21) Anmeldenummer: 24192955.3
(22) Anmeldetag: 05.08.2024
(51) Int. Cl.: G02B 5/00, G01V 8/10, F16P 3/14

(54) **OPTISCHES GERÄT MIT STREULICHTREDUZIERUNG**

(30) Priorität: 11.08.2023 DE 102023121625
(71) Anmelder: Pilz GmbH & Co. KG, 73760 Ostfildern (DE)
(72) Erfinder: Ambuehl, Daniel, 7310 Bad Ragaz (CH); Guldimann, Dominik, 7310 Bad Ragaz (CH); Konieczna, Zuzanna, 7310 Bad Ragaz (CH); Mayilo, Sergiy, 7310 Bad Ragaz (CH); Ritter, Joel, 7310 Bad Ragaz (CH); Wendler, Martin, 73760 Ostfildern (DE)
(74) Vertreter: Witte, Weller & Partner Patentanwälte mbB

(57) **Zusammenfassung**

Optisches Gerät (10), aufweisend: ein strahlformendes Element (12) aus einem ersten Material mit einer Grundfläche (20) und einer Deckfläche (22), die einander gegenüberliegen, sowie mit einer umgebenden Mantelfläche (24), die die Grundfläche (20) und die Deckfläche (22) miteinander verbindet; sowie einen Träger (14) aus einem zweiten Material, der mit einer Aufnahme (18) für das strahlformende Element (18) ausgebildet ist und mindestens eine gemeinsame Kontaktfläche (26) mit der Mantelfläche (24) des strahlformenden Elements (12) aufweist. An der Kontaktfläche (26) zwischen dem strahlformenden Element (12) und dem Träger (14) liegen das erste Material und das zweite Material unmittelbar aneinander an. Das erste Material ist für eine definierte elektromagnetische Strahlung durchlässig und das zweite Material ist für die definierte elektromagnetische Strahlung absorbierend. Ferner weisen das erste Material und das zweite Material bezogen auf die definierte elektromagnetische Strahlung jeweils einen definierten Brechungsindex (n₁, n₂) auf. Der definierte Brechungsindex (n₂) des zweiten Materials ist in einem definierten Verhältnis zu dem definierten Brechungsindex (n₁) des ersten Materials eingestellt, um an der Kontaktfläche (26) eine spezifische Übergangscharakteristik für die definierte elektromagnetische Strahlung einzustellen.

## Beschreibung

Die vorliegende Erfindung betrifft ein optisches Gerät, insbesondere eine Sicherheitslichtschranke bzw. ein Sicherheitslichtgitter oder einen Sicherheitslaserscanner, sowie ein entsprechendes Verfahren zur Herstellung eines solchen Geräts.

Im Allgemeinen ist ein optisches Gerät ein technisches Gerät, das elektromagnetische Strahlung, insbesondere Licht, verwendet, um Informationen zu erfassen, zu verarbeiten, zu manipulieren oder anzuzeigen. Optische Geräte werden in vielen Bereichen eingesetzt, z. B. in der Fotografie, Astronomie, Mikroskopie, Augenheilkunde, Kommunikation, Unterhaltungselektronik und vielen anderen. Optische Geräte nutzen die Eigenschaften des Lichts wie Reflexion, Brechung und Absorption. Sie verwenden Linsen, Spiegel, Prismen und andere optische Komponenten, um Licht zu lenken und zu formen. Beispiele für optische Geräte sind Kameras, Ferngläser, Mikroskope, Teleskope, Laser, Projektoren, Bildschirme und optische Sensoren.

Optische Sensoren im Speziellen sind Geräte, die mit Hilfe von Licht bestimmte physikalische oder chemische Eigenschaften messen oder erkennen. Sie wandeln optische Signale in elektrische Signale um, die dann analysiert und interpretiert werden können. Optische Sensoren werden in vielen Bereichen eingesetzt, z. B. in der Industrie, Medizin, Umweltüberwachung, Sicherheitstechnik und Automatisierung. Beispiele für optische Sensoren sind u.a. Lichtschranken einschließlich Lichtgitter oder Laserscanner. Lichtschranken weisen eine oder mehrere Lichtquellen (Sender) und einen oder mehrere Lichtempfänger auf. Wird das Licht zwischen Sender und Empfänger unterbrochen, zum Beispiel durch einen Gegenstand oder eine Person, erkennt der Sensor die Veränderung und gibt ein Signal aus. Lichtschranken und Lichtgitter werden häufig in der Automatisierungstechnik, bei Zugangskontrollen und an Maschinen als berührungslos wirkende Schutzeinrichtungen (BWS) eingesetzt.

Beim Einsatz von BWS, insbesondere von Lichtgittern, an technischen Anlagen sind verschiedene Normen und Sicherheitsvorschriften zu beachten. Für Europa sind dies u.a. EN ISO 13849-1, EN 61496-1 und EN 61496-2 sowie EN 62046.

EN ISO 13849-1 behandelt die Sicherheit von Maschinen und definiert Anforderungen an sicherheitsbezogene Steuerungssysteme, einschließlich des Einsatzes von Lichtvorhängen als Schutzeinrichtungen. EN 61496-1 und EN 61496-2 beschreiben die allgemeinen Anforderungen und Prüfverfahren für Lichtvorhänge und Lichtschranken, einschließlich ihrer elektrischen und optischen Eigenschaften. EN 62046 behandelt die Anwendung von Lichtgittern zur Maschinensteuerung und beschreibt Anforderungen an Funktion, Installation, Inbetriebnahme, Betrieb und Wartung von Lichtgittern.

Für BWS wird in diesen Normen u.a. festgelegt, den zulässigen Öffnungswinkel für Sender und Empfänger zu begrenzen, d.h. insbesondere den Einfluss von Streulicht auf das System zu begrenzen und zu minimieren. Eine wichtige Quelle dieses Streulichts ist die Reflexion und Streuung des Lichts an den Wänden eines den optischen Kanal definierenden Gehäuses, z. B. eines Tubus. Eine bekannte Methode, mit Streulicht umzugehen, sind Lichtfallen. Sie verhindern, dass ein Lichtstrahl an den Wänden reflektiert oder gestreut wird und einen Detektor erreicht.

Als Beispiel für eine solche Lichtfalle zeigt EP 1 420 271 A2 einen Elementhalter als einstückiges Element mit einer lichtblockierenden Komponente zur Begrenzung des Streuwinkels des Lichts. Der Elementhalter weist einen zylindrischen Innenkanal auf und kann an einem Ende ein optisches Element lösbar halten. An einem gegenüberliegenden Ende des Elementhalters ist eine Linse befestigt. Der Elementhalter ist ein geformtes Kunststoffteil und weist eine einzige lichtabschirmende Wand auf, die einstückig mit dem Elementhalter geformt ist, so dass sie sich über den Innenkanal in einer Ebene erstreckt, die ungefähr gleich weit von dem optoelektronischen Detektorelement und der Linse entfernt ist, um den Streuwinkel des Lichts zu begrenzen.

DE 199 10 321A1 zeigt ein weiteres Beispiel für den Einsatz von Lichtfallen in einer Lichtschranke bzw. einem Lichtgitter.

Eine weitere Möglichkeit, mit Streulicht umzugehen, ist die Verwendung spezieller Filter oder angepasster Lichtquellen. Ein Beispiel hierfür zeigt EP 2 535 741 A2. Hier werden Schichten auf Phosphorbasis, die z.B. eine Mischung aus Nano-Phosphor und/oder Quantenpunkt-Phosphor enthalten, verwendet, um aufgenommenes Licht (einschließlich sowohl des beabsichtigten reflektierten Lichts als auch des Sonnenlichts) vor dem Empfang durch einen Lichtdetektor zu filtern.

Vor diesem Hintergrund ist es eine Aufgabe der vorliegenden Offenbarung, eine neue, kostengünstige Methode zur Streulichtminimierung aufzuzeigen. Eine weitere Aufgabe ist es, ein Herstellungsverfahren für ein optisches Gerät anzugeben, das die neue kostengünstige Methode zur Streulichtminimierung effizient implementiert.

Gemäß einem Aspekt der vorliegenden Offenbarung wird diese Aufgabe gelöst durch ein optisches Gerät, aufweisend: ein strahlformendes Element aus einem ersten Material mit einer Grundfläche und einer Deckfläche, die einander gegenüberliegen, sowie mit einer umgebenden Mantelfläche, die die Grundfläche und die Deckfläche miteinander verbindet; einen Träger aus einem zweiten Material, der mit einer Aufnahme für das strahlformende Element ausgebildet ist und mindestens eine gemeinsame Kontaktfläche mit der Mantelfläche des strahlformenden Elements aufweist. An der Kontaktfläche zwischen dem strahlformenden Element und dem Träger liegt das erste Material und das zweite Material unmittelbar aneinander an. Das erste Material ist für eine definierte elektromagnetische Strahlung durchlässig und das zweite Material ist für die definierte elektromagnetische Strahlung absorbierend. Ferner weisen das erste Material und das zweite Material bezogen auf die definierte elektromagnetische Strahlung jeweils einen definierten Brechungsindex auf. Dabei ist der definierte Brechungsindex des zweiten Materials in einem definierten Verhältnis zu dem definierten Brechungsindex des ersten Materials eingestellt, um an der Kontaktfläche eine spezifische Übergangscharakteristik für die definierte elektromagnetische Strahlung einzustellen.

Gemäß einem weiteren Aspekt der vorliegenden Offenbarung wird diese Aufgabe ferner gelöst durch ein Herstellungsverfahren für ein optisches Gerät mit einem strahlformenden Element und einem Träger. Das Verfahren weist die folgenden Schritte auf: Bereitstellen eines ersten Materials für das strahlformende Element, das für eine definierte elektromagnetische Strahlung durchlässig ist und bezogen auf die definierte elektromagnetische Strahlung einen ersten definierten Brechungsindex aufweist; Bereitstellen eines zweiten Materials für den Träger, das für die definierte elektromagnetische Strahlung absorbierend ist und bezogen auf die definierte elektromagnetische Strahlung einen zweiten definierten Brechungsindex aufweist; Herstellen des strahlformenden Elements aus dem ersten Material und Herstellen des Trägers aus dem zweiten Material; Zusammenfügen des ersten Materials und des zweiten Materials zu einem integral verbundenen (einstückigen und daher nicht zerstörungsfrei trennbaren) Bauteil aus dem ersten Material und dem zweiten Material, wobei das strahlformende Element eine Grundfläche und eine Deckfläche, die einander gegenüberliegen, sowie eine umgebende Mantelfläche, die die Grundfläche und die Deckfläche miteinander verbindet, aufweist, wobei der Träger mit einer Aufnahme für das strahlformende Element ausgebildet ist und mindestens eine gemeinsame Kontaktfläche mit der umgebenden Mantelfläche des strahlformenden Elements aufweist, und wobei der definierte Brechungsindex des zweiten Materials in einem definierten Verhältnis zu dem definierten Brechungsindex des ersten Materials eingestellt ist, um an der Kontaktfläche eine spezifische Übergangscharakteristik für die definierte elektromagnetische Strahlung einzustellen.

Es ist somit eine Idee, unerwünschten Auswirkungen von Streulicht, die das optische Gerät beeinflussen können, über die Materialauswahl für das strahlformende Element und dessen Träger sowie deren Verbindung miteinander zu begegnen. Zu diesem Zweck ist zumindest eine Kontaktfläche zwischen dem strahlformenden Element und dem Träger, an der eine Reflexion oder Brechung von Licht vermieden oder zumindest reduziert werden soll, so einzurichten, dass das Material des strahlformenden Elements und das des Trägers an der Kontaktfläche unmittelbar aneinander anliegen. Vorzugsweise werden bereits bei der Herstellung das strahlformende Element und der Träger so miteinander verbunden, dass sich die Kontaktfläche hohlraumfrei ausbildet und insbesondere kein gasförmiges Medium zwischen den ersten und zweiten Materialien eingeschlossen ist. Vorzugsweise liegen das erste Material und das zweite Material an der Kontaktfläche daher direkt und flächig aneinander, ohne dass ein drittes Material, das sich von dem ersten Material und dem zweiten Material unterscheidet, dazwischen angeordnet sind. In einigen bevorzugten Ausführungsbeispielen werden das erste und das zweite Material in einem Spritzgießverfahren integral miteinander verbunden. Beispielsweise kann das erste Material an das zweite Material angespritzt werden oder umgekehrt. In anderen bevorzugten Ausführungsbeispielen können das erste Material und das zweite Material thermisch miteinander verschweißt werden, insbesondere durch Laserschweißen. Prinzipiell ist auch denkbar, das erste Material und das zweite Material durch Anlösen mit einem flüchtigen Klebstoff oder durch Ansprengen direkt und ohne materialfremde Zwischenschicht zu einem integralen Bauelement zu verbinden. Das strahlformende Element, beispielsweise eine Linse, ist dabei aus einem Material gebildet, dass für die definierte elektromagnetische Strahlung, insbesondere im Wellenlängenbereich des sichtbaren und/oder infraroten Lichts, durchlässig ist. Der Träger ist seinerseits zumindest an einem hinter der Kontaktfläche liegenden Teil aus einem für die elektromagnetische Strahlung in dem Wellenlängenbereich absorbierenden Material hergestellt. Ferner werden die Brechungsindizes für das Material des strahlformenden Elements und des Trägers bezogen auf die elektromagnetische Strahlung so gewählt, dass sich eine bestimmte Übergangscharakteristik an der Kontaktfläche einstellt. Insbesondere sind die Brechungsindizes so gewählt, dass die elektromagnetische Strahlung an der mindestens einen Kontaktfläche so reflexionsfrei wie möglich in das zweite Material eintreten kann und anschließend durch das zweite Material so weitgehend wie möglich absorbiert wird, d.h. dass insbesondere die Kontaktfläche aufgrund der Materialpaarung weitgehend reflexions- und brechungsarm ist.

Es hat sich gezeigt, dass die Brechungsindizes des Materials des strahlformenden Elements und des Materials des Trägers vorteilhaft aneinander angeglichen werden. Das Verhältnis zwischen den Brechungsindizes beträgt vorzugsweise 1. Aus den Fresnel-Formeln ergibt sich, dass bei im Wesentlichen gleichen Brechungsindizes in einem bestimmten Einfallswinkelbereich einfallendes Licht weitgehend unreflektiert und ungebrochen in das Trägermaterial eintritt und von diesem absorbiert werden kann. Licht, das aus diesem Einfallswinkelbereich auf die Kontaktfläche auftrifft, kann somit auf einfache und wirksame Weise an der weiteren Ausbreitung durch das strahlformende Element gehindert werden. Die Detektion von einfallendem Licht bzw. die Emission von Lichtstrahlen kann auf diese Weise vorteilhaft gesteuert werden, da Streulichteffekte wirksam vermieden oder reduziert werden können. Vorzugsweise handelt es sich bei dem Material für das strahlformende Element und dem Material für den Träger um das gleiche Material mit unterschiedlichem Absorptionsgrad, d.h. das erste Material und das zweite Material basieren auf demselben Grundmaterial. Das Material kann in einem gemeinsamen Herstellungsprozess zu dem Träger und dem strahlformenden Element verarbeitet werden.

Da die Streulichtminderung im Wesentlichen über das Material des Trägers und des strahlformenden Elements und dessen Verarbeitung eingestellt wird, kann der Aufbau des strahlformenden Elements und des Trägers im Wesentlichen frei gewählt werden. Daraus ergeben sich neue Möglichkeiten, optische Geräte einfacher und effektiver zu gestalten sowie schneller und kostengünstiger herzustellen. Damit ist die eingangs genannte Aufgabe vollständig gelöst.

In einer weiteren Ausgestaltung kann das definierte Verhältnis der Brechungsindizes des Trägermaterials und des Materials des strahlformenden Elements zwischen 0,9 und 1,1, vorzugsweise zwischen 0,95 und 1,05, insbesondere 1 sein.

Bei dieser Anordnung sind die Brechungsindizes der verschiedenen Materialien für das strahlformende Element und den Träger vorzugsweise gleich oder zumindest sehr ähnlich, um die gewünschte Übergangscharakteristik zu erhalten. Dies lässt sich besonders einfach dadurch erreichen, dass für beide Komponenten das gleiche Ausgangsmaterial verwendet wird, wobei das Ausgangsmaterial für den Träger z. B. durch Zugabe von Pigmenten strahlungsabsorbierend gemacht wird.

In einer weiteren Ausgestaltung kann die spezifische Übergangscharakteristik bewirken, dass die Kontaktfläche reflexions- und brechungsarm, insbesondere reflexions- und brechungsfrei für die durch die Grund- und Deckfläche eingekoppelte definierte elektromagnetische Strahlung ist.

Ferner kann in einer weiteren Ausgestaltung die spezifische Übergangscharakteristik bewirken, dass die in einem definierten Einfallswinkelbereich durch die Grund- und Deckfläche eingekoppelte definierte elektromagnetische Strahlung von dem zweiten Material absorbiert wird.

Die durch die Materialwahl einstellbare Übergangscharakteristik ermöglicht somit eine Anpassung der Kontaktfläche an die geforderten Bedingungen, die durch die Struktur des strahlformenden Elements und/oder des Trägers, die Art der elektromagnetischen Strahlung oder die Art der Einkopplung der elektromagnetischen Strahlung in das strahlformende Element vorgegeben sein können. Das optische Gerät kann auf diese Weise besonders flexibel gestaltet werden.

In einer weiteren Ausgestaltung kann das erste Material ein transparenter Kunststoff und das zweite Material ein pigmentierter bzw. eingefärbter, insbesondere schwarz eingefärbter Kunststoff sein.

Kunststoffe lassen sich leicht in verschiedene Formen bringen. Außerdem können die Eigenschaften von Kunststoffen durch Beimischung verschiedener Fremdstoffe beeinflusst werden. Dies bezieht sich insbesondere auf die optischen Eigenschaften. Ferner lassen sich Kunststoffe besonders gut in Spritzgussverfahren verarbeiten. Insbesondere können in einem Spritzgussverfahren verschiedene Kunststoffe gleichzeitig verarbeitet und zu einem einteiligen Bauteil zusammengefügt werden, so dass zwischen den einzelnen Kunststoffen eine direkte, fugenlose Verbindung entsteht. Besonders lichtabsorbierend ist schwarzer Kunststoff. Die Verwendung von Kunststoff als Ausgangsmaterial vereinfacht daher vorteilhaft die oben beschriebene Konstruktion des optischen Geräts.

Der für das erste und/oder zweite Material verwendete Kunststoff kann in bevorzugten Ausführungsbeispielen Polycarbonat (PC), Polymethylmethacrylat (PMMA), Cycloolefin-Copolymere, optische Polyester oder Polysulfone beinhalten oder daraus bestehen. PMMA bzw. Polymethylmethacrylat ist auch als Acrylglas oder Plexiglas bekannt. PMMA ist ein transparentes thermoplastisches Polymer, das aus Methylmethacrylat-Monomereinheiten gebildet ist und sich durch eine hohe Lichtdurchlässigkeit und optische Klarheit auszeichnet. Es ist für das menschliche Auge nahezu farblos und hat eine ähnliche Transparenz wie Glas, jedoch bei einem geringeren Gewicht. Die Verwendung von PMMA als Ausgangsmaterial begünstigt daher die optischen Eigenschaften des optischen Gerätes. Polycarbonat ist aufgrund seiner guten mechanischen Eigenschaften, wie Bruchdehnung und Schlagzähigkeit, in einigen Ausführungsbeispielen bevorzugt. Ein Träger aus Polycarbonat erlaubt Verbindungsmöglichkeiten wie Schnapphaken oder Kaltprägestellen, welche mit PMMA schwierig zu realisieren wären.

Das strahlformende Element und der Träger können vorteilhaft als ein einstückiges, d.h. integral verbundenes Bauteil ausgebildet sein, das insbesondere in einem Mehrkomponenten-Spritzgussverfahren hergestellt ist, beispielsweise einem Kaskaden-Spritzgussverfahren oder einem Sandwich-Spritzgussverfahren.

Ein einstückiges, integral aus zumindest zwei Bestandteilen verbundenes Bauteil vereinfacht die Montage des optischen Gerätes und erlaubt dessen kostengünstige Herstellung. Ein Mehrkomponenten-Spritzgießverfahren ermöglicht auf sehr effiziente Weise eine nahtlose Verbindung zwischen den verwendeten Materialien in einem bewährten und automatisierten Herstellungsprozess. Damit ist gewährleistet, dass sich die oben beschriebenen Effekte der Materialauswahl (Einstellung der Brechungsindizes) an der Kontaktfläche einstellen, da kein weiteres Medium zwischen den Materialien eingeschlossen ist. Darüber hinaus erlaubt das Spritzgießen generell eine sehr flexible Formgebung. Prinzipiell kann das einstückige Bauteil aber auch auf andere Weise hergestellt werden, beispielsweise mit einem Laserschweißverfahren, mit dem das strahlformende Element und der Träger zu dem einstückigen Bauteil integral verbunden werden

In einer weiteren Ausgestaltung ist die Aufnahme trichterförmig und in einer Richtung von der Deckfläche zu der Grundfläche verjüngt ausgebildet.

Entsprechend dieser Ausgestaltung kann die Aufnahme trichterförmig ausgebildet sein, wodurch das strahlformende Element vorteilhaft verkleinert werden kann. Die trichterförmige Ausbildung, die im Allgemeinen für eine Streulichtverminderung eher ungeeignet ist, kann hier durch die besondere Materialwahl dennoch so eingesetzt werden, dass die genannte Verkleinerung erreicht wird. Die Verkleinerung des strahlformenden Elements trägt einerseits zur Materialeinsparung bei, andererseits wird die Wahrscheinlichkeit der Lunkerbildung im Elementkörper minimiert, da das Gesamtvolumen des strahlformenden Elements kleiner wird. Diese Anordnung trägt somit weiter zu einer kostengünstigen und optimierten Ausbildung des optischen Gerätes bei.

In einer weiteren Ausgestaltung kann die Aufnahme zumindest einen Teil der Grundfläche mit zumindest einer Öffnung für die definierte elektromagnetische Strahlung umschließen, wobei die Öffnung als Blende für ein optoelektronisches Element im Strahlengang, insbesondere für einen optoelektronischen Emitter oder Detektor, ausgebildet ist. In einer weiteren Ausgestaltung, die alternativ oder ergänzend implementiert sein kann, bildet die Aufnahme einen über die Deckfläche hervorstehenden Tubus.

Entsprechend dieser Auslegung können weitere Elemente und Fertigungsschritte entfallen, indem eine oder mehrere optische Blenden im Strahlengang des optischen Geräts direkt durch den Träger realisiert werden. In einigen bevorzugten Ausführungsbeispielen bildet der Träger eine Aperturblende im Strahlengang. Ferner kann der Träger eine Blende bilden, die die Auflösung eines Lichtgitters mit einer Vielzahl von parallel zueinander verlaufenden Lichtstrahlen definiert. In einem besonders bevorzugten Ausführungsbeispiel bilden das strahlformende Element und die Aufnahme ein einstückiges Bauteil, das eine optische Linse und einen Tubus mit einer auflösungsdefinierenden Blende implementiert. All diese Varianten tragen zu einer weiteren Kosteneinsparung bei der Herstellung des optischen Gerätes, insbesondere in Form einer Sicherheitslichtschranke oder eines Sicherheitslichtgitter bei.

Die als Öffnung ausgebildete Blende kann mit dem Material des strahlformenden Elements ausgefüllt sein.

Diese Ausgestaltung begünstigt die Verbindung von Träger und strahlformenden Element zu einem einstückigen Bauteil und vereinfacht dessen Herstellung. Die Ausgestaltung kann somit auch zu einer weiteren Kosteneinsparung beitragen. Ein weiterer Vorteil dieser Ausgestaltung ist es, dass durch den Herstellungsprozess im 2K Spritzgussverfahren die Linsenachse und Lochblendenachse (Tubus) sehr genau aufeinander liegen, insbesondere bei einem Herstellungsprozess im 2K Spritzgussverfahren, und dass die Abweichung zur idealen optischen Achse sehr klein gehalten werden kann. Dadurch verbessert sich die Verfügbarkeit und Ausrichtbarkeit eines Lichtgitters.

In einer weiteren Ausgestaltung sind in der Aufnahme vorspringende Strukturen ausgebildet, die als Lichtfallen fungieren..

Die Strukturen können insbesondere treppenartige Stufen, zinnenartige Vorsprünge und/oder eine Vielzahl von kammartig hochragenden Wänden beinhalten. Wie eingangs dargelegt ist, sind Lichtfallen als solche bereits bekannt. Die Ausgestaltung kann jedoch besonders vorteilhaft mit der spezifischen Übergangscharakteristik an der Kontaktfläche zwischen dem ersten und dem zweiten Material kombiniert sein, weil die vorteilhaften Effekte der spezifischen Übergangscharakteristik vor allem bei kleineren Einfallswinkeln der definierten elektromagnetischen Strahlung zum Tragen kommen, während Lichtfallen vor allem bei größeren Einfallswinkeln effektiv sind.

In einer weiteren Ausgestaltung weist das optische Gerät eine Vielzahl von strahlformenden Elementen auf, für die jeweils eine eigene Aufnahme im Träger ausgebildet ist.

In dieser Ausgestaltung kann eine Vielzahl von strahlformenden Elementen gleichzeitig mit dem Träger gebildet werden, was die Herstellung spezieller optischer Vorrichtungen, wie z.B. Lichtgitter mit einer Vielzahl von optischen Elementen, vorteilhaft vereinfacht.

In einer weiteren Ausgestaltung ist das optische Gerät ein optischer Sensor, insbesondere ein Sicherheitslichtgitter oder ein Laserscanner, die die Sicherheitsanforderungsstufe SIL 3 gemäß IEC 61508/IEC61511 oder einen Performance Level PL d gemäß EN ISO 13849-1 erfüllen.

Optische Sensoren sind, wie bereits erwähnt, Geräte, die Licht verwenden, um bestimmte physikalische oder chemische Eigenschaften zu messen oder zu erkennen. Sie wandeln optische Signale in elektrische Signale um, die dann analysiert und interpretiert werden können. Bei optischen Sensoren ist es besonders wichtig, dass nur dediziertes Licht eine Detektion auslöst und dass unerwünschtes Streulicht, das zu Fehlauslösungen führen kann oder - noch schlimmer- die Detektion eines sicherheitsrelevanten Objekts verhindert, vermieden wird. Dies kann durch die oben beschriebenen Konstruktionen vorteilhaft erreicht werden, so dass optimierte optische Sensoren realisiert werden können.

Insbesondere kann in einer weiteren Ausgestaltung das optische Gerät ein Lichtgitter sein.

Lichtgitter weisen eine Vielzahl optischer Elemente auf, die zusammenwirken, um z.B. eine berührungslos wirkende Schutzeinrichtung zu realisieren. Da eine Vielzahl optischer Elemente entsprechend der oben dargestellten Konfiguration auf einfache Weise realisierbar ist, kann ein Lichtgitter auf diese Weise besonders kostengünstig realisiert werden.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert.
Fig. 1 zeigt in einer schematischen Querschnittsansicht ein optisches Gerät mit einer Lichtfalle zur Streulichtminimierung, die dem Stand der Technik entspricht.
Fig. 2 zeigt in einer schematischen Querschnittsansicht ein optisches Gerät gemäß einem Ausführungsbeispiel der vorliegenden Offenbarung mit einem passiven optoelektronischen Element.
Fig. 3 zeigt in einer schematischen Querschnittsansicht das optische Gerät gemäß dem Ausführungsbeispiel nach Fig. 2 mit einem aktiven optoelektronischen Element.
Fig. 4A zeigt in einer schematischen Querschnittsansicht eine weitere Variante des Ausführungsbeispiels gemäß Fig. 2 in einer Draufsicht.
Fig. 4B zeigt in einer schematischen Querschnittsansicht eine weitere Variante des Ausführungsbeispiels gemäß Fig. 2 in einer Schnittansicht.
Fig. 4C zeigt in einer schematischen Querschnittsansicht eine weitere Variante des Ausführungsbeispiels gemäß Fig. 2 in einer Schnittansicht.
Fig. 5 zeigt in einer schematischen Querschnittsansicht eine weitere Variante des Ausführungsbeispiels gemäß Fig. 2 in einer Schnittansicht.
Fig. 6A zeigt in einer schematischen Querschnittsansicht eine weitere Variante des Ausführungsbeispiels gemäß Fig. 2 in einer Schnittansicht.
Fig. 6B zeigt in einer schematischen Querschnittsansicht eine weitere Variante des Ausführungsbeispiels gemäß Fig. 2 in einer Schnittansicht.
Fig. 7A zeigt ein Anwendungsbeispiel für ein optisches Gerät der vorliegenden Offenbarung in einer perspektivischen Ansicht.
Fig. 7B zeigt das Anwendungsbeispiel nach Fig. 7A in einer Draufsicht.
Fig. 7C zeigt das Anwendungsbeispiel nach Fig. 7A in einer Seitenansicht.
Fig. 7D zeigt das Anwendungsbeispiel nach Fig. 7A in einer Querschnittsansicht entlang der Linie C-C` in Fig. 7C.
Figs. 8A bis 8C zeigen Varianten mit zusätzlichen Lichtfallen im Inneren des Trägers.

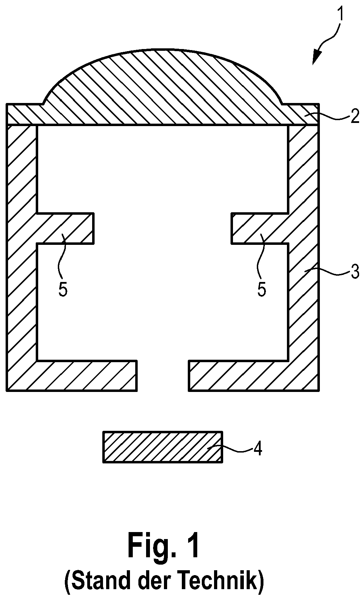

Fig. 1 zeigt ein optisches Gerät 1 mit einer Lichtfalle zur Streulichtminimierung, die dem Stand der Technik entspricht.

Das optische Gerät 1 aus dem Stand der Technik ist in der gezeigten Ausführungsform aus drei Einzelteilen, nämlich einem strahlformenden Element (Linse) 2, einem Träger 3 in Form eines Tubus sowie einem optoelektronischen Element 4 gebildet. Über das strahlformende Element 2 wird elektromagnetische Strahlung, insbesondere Licht, in das optische Gerät eingekoppelt. Der tubusartige Träger 3 bildet einen optischen Kanal, durch den das eingekoppelte Licht zum optoelektronischen Element 4 geführt wird. Innerhalb des rohrförmigen Trägers 3 sind Lichtfallen ausgebildet, die verhindern, dass ein Teil des einfallenden Lichts, insbesondere das an den Wänden des Tubus reflektierte Licht, zum optoelektronischen Element 4 gelangt. Durch die Lichtfallen 5 wird der Einfluss von Streulicht auf die Erfassung durch das optoelektronische Element 4 reduziert.

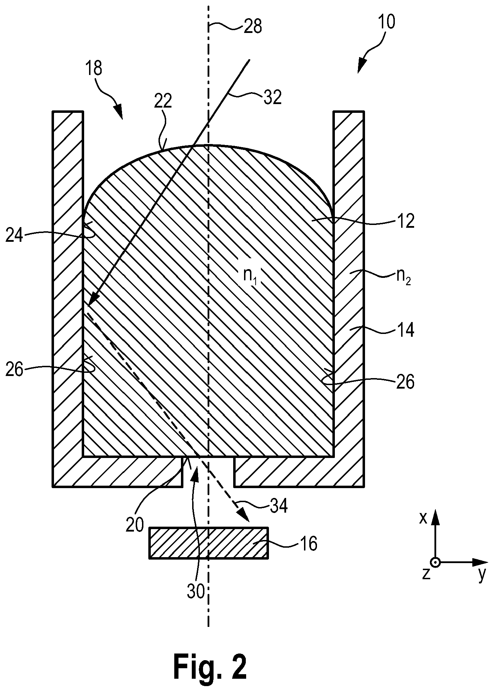

Fig. 2 zeigt ein optisches Gerät gemäß einem Ausführungsbeispiel der vorliegenden Offenbarung.

Das optische Gerät wird hier insgesamt mit dem Bezugszeichen 10 bezeichnet. Wie die optische Vorrichtung aus dem Stand der Technik weist auch das optische Gerät 10 ein strahlformendes Element 12 sowie einen entsprechenden Träger 14 auf. Zusätzlich kann ein optoelektronisches Element 16 vorgesehen sein, das hier beispielhaft als Detektor für elektromagnetische Strahlung, insbesondere Licht, ausgebildet ist. In anderen Ausführungsformen kann das optoelektronische Element einen Sender für elektromagnetische Strahlung, insbesondere Licht im sichtbaren und/oder infraroten Bereich, beinhalten. Ein solcher Sender wird im Folgenden als aktives Element bezeichnet, ein Detektor als passives optoelektronisches Element.

Der Träger 14 ist als Aufnahme 18 ausgebildet oder weist zumindest eine solche auf, in die das strahlformende Element 12 eingefasst ist. Das strahlformende Element 12 weist eine Grundfläche 20, eine der Grundfläche gegenüberliegende Deckfläche 22 sowie eine die Grundfläche und die Deckfläche verbindende Mantelfläche 24 auf. Das strahlformende Element 12 kann ein homogener Körper mit einheitlicher Zusammensetzung und Struktur sein, d. h. die Materialeigenschaften wie Dichte, chemische Zusammensetzung und physikalische Eigenschaften können in jedem Teil des Körpers gleich sein.

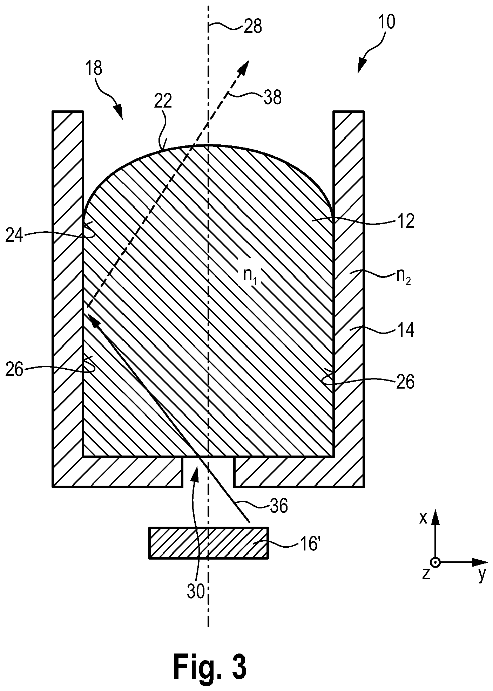

Die Aufnahme 18 für das strahlformende Element 12 kann, wie hier dargestellt, als Tubus ausgebildet sein, dessen freies Ende über die Deckfläche 22 hervorsteht und somit eine Blende bildet. Diese Blende kann bei einer Lichtschranke, einem Lichtgitter oder einem Laserscanner die Auflösung definieren, mit der das optische Gerät Objekte detektieren kann. Die Form der Aufnahme 18 ist hierauf jedoch nicht beschränkt. Das in der Aufnahme 18 aufgenommene strahlformende Element 12 weist mit dem Träger 14 zumindest eine gemeinsame Kontaktfläche 26 auf. Die Kontaktfläche 26 ist hier ein Abschnitt der Mantelfläche 24. In verschiedenen Ausführungsformen kann die Kontaktfläche 26 auch die gesamte Mantelfläche 24 und Abschnitte der Grundfläche 20 umfassen. Die Deckfläche 22 oder zumindest ein Teil derselben liegt frei von dem Träger 14. Über die Deckfläche 22 kann elektromagnetische Strahlung von außen in das optische Gerät 10 eingekoppelt werden (Fig. 2) oder über die Deckfläche 22 kann elektromagnetische Strahlung von dem optischen Gerät 10 emittiert werden (vgl. Fig. 3).

Im gezeigten Beispiel erstreckt sich eine optische Achse 28 des optischen Geräts 10 entlang einer ersten Richtung (im Folgenden als x-Richtung bezeichnet). Die Grund- und die Deckfläche 20, 22 des strahlformenden Elements 12 liegen quer, insbesondere senkrecht zur x-Richtung. Die Mantelfläche 24 kann ihrerseits eine Rotationsfläche um die optische Achse 28 oder eine Fläche aus einer Vielzahl von Seitenflächen sein, die zusammen die Grund- und Deckfläche 20, 22 miteinander verbinden. Im gezeigten Beispiel weist die Mantelfläche eine erste und eine zweite Seitenfläche auf, die in einer zweiten Richtung senkrecht zur ersten Richtung (im Folgenden als y-Richtung bezeichnet) quer, insbesondere senkrecht, verlaufen. Die erste und die zweite Seitenfläche sind hier Teil der Kontaktfläche 26 mit dem Träger 14. Die Deckfläche 22 ist hier in x-Richtung frei vom Träger 14. Über die Deckfläche 22 wird elektromagnetische Strahlung von außen in das optische Gerät 10 eingekoppelt oder abgestrahlt. Die Grundfläche 20 liegt der Deckfläche 22 gegenüber und wird hier zumindest teilweise vom Träger 14 überdeckt. In der Grundfläche kann eine Öffnung 30 vorgesehen sein, durch die die elektromagnetische Strahlung an das optoelektronische Element 16 abgegeben werden kann bzw. durch die das optoelektronische Element 16 Strahlung in das strahlformende Element einkoppeln kann. Die Öffnung 30 kann auch weitere optische Funktionen übernehmen, beispielsweise als Aperturblende. In einer dritten Richtung, die sowohl senkrecht zu der ersten Richtung als auch senkrecht zu der zweiten Richtung verläuft (im Folgenden als z-Richtung bezeichnet), kann das strahlformende Element 12 ebenfalls von dem Träger 14 umgeben sein, so dass auch hier Abschnitte Teil der Kontaktfläche 26 sein können.

Das Material (erstes Material), aus dem das strahlformende Element 12 gebildet ist, und das Material (zweites Material), aus dem der Träger 14 gebildet ist, sind in besonderer Weise ausgewählt bzw. präpariert, um an der Kontaktfläche 26 eine definierte Übergangscharakteristik der sich durch das strahlformende Element 12 ausbreitenden elektromagnetischen Strahlung zu erreichen. Demnach ist das erste Material ein für elektromagnetische Strahlung durchlässiges, vorzugsweise farbloses Material mit einer Transparenz ähnlich der von Glas. Das zweite Material ist dagegen ein intransparentes Material, das elektromagnetische Strahlung absorbiert. Der Absorptionsgrad des zweiten Materials für die elektromagnetische Strahlung ist möglichst hoch. Das zweite Material ist daher vorzugsweise schwarz.

Das strahlformende Element 12 ist derart in die Aufnahme 18 integriert, dass zumindest an der einen gemeinsamen Kontaktfläche 26 das erste Material fugenlos an dem zweiten Material anliegt. Die Übergangscharakteristik an der Kontaktfläche 26 wird dabei im Wesentlichen durch die Brechungsindizes (n₁, n₂) des ersten und des zweiten Materials nach der Fresnel-Formel bestimmt. Um eine möglichst reflexions- und brechungsarme Übergangscharakteristik an der Kontaktfläche zu erreichen, sind die Brechungsindizes (n₁, n₂) des ersten und zweiten Materials gleich oder zumindest in einem engen Toleranzbereich (z. B. kleiner 5 %) ähnlich (n₁ ≈ n₂). In diesem Fall werden die auf die Kontaktfläche 26 auftreffenden Strahlen (zumindest Strahlen in einem definierten Einfallswinkelbereich) nicht oder nur in geringem Maße an der Kontaktfläche gebrochen oder reflektiert, sondern gehen nahezu vollständig in das zweite Material des Trägers 14 über und werden dort absorbiert.

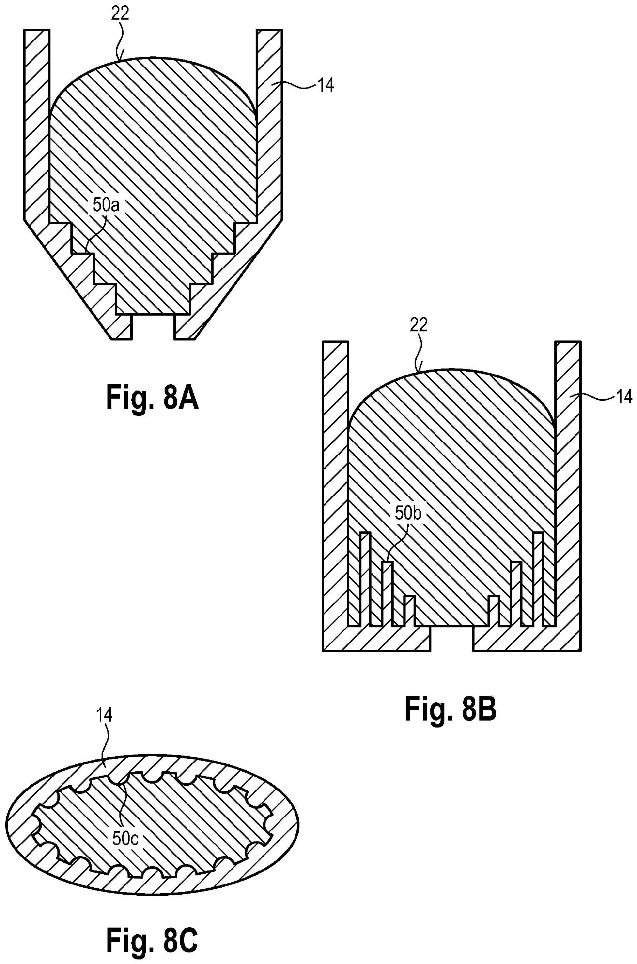

Unerwünschtes Streulicht, das unter einem Winkel zur optischen Achse 28 durch die Deckfläche 22 in das strahlformende Element 12 einkoppelt, hier beispielhaft durch den Pfeil 32 angedeutet, wird nicht, wie sonst üblich und hier durch den Pfeil 34 angedeutet, an der Kontaktfläche 26 auf das optoelektronische Element 16 reflektiert, sondern von dem Material des Trägers 14 absorbiert. Dadurch wird verhindert, dass unerwünschtes Streulicht auf das optoelektronische Element 16 trifft und zu einer Fehldetektion führt. Das optische Gerät gemäß Fig. 2 kann daher in einigen Ausführungsbeispielen ohne die in Fig. 1 gezeigten Lichtfallen oder die in der Beschreibungseinleitung genannten Filtern realisiert sein. In anderen Ausführungsbeispielen kann das optische Gerät jedoch zusätzliche Strukturen im Inneren der Aufnahme 18 aufweisen, die als Lichtfalle fungieren. Die Strukturen können beispielsweise treppenartige Stufen sein, die in einem sich trichterförmig in Richtung der Grundfläche 20 verjüngenden Abschnitt ausgebildet sind (Fig. 8A), im Querschnitt kammartig von der Grundfläche 20 aufstehende, konzentrische Wände (Fig. 8B) oder zinnenartige Vorsprünge an der Innenwand der Aufnahme 18 (Fig. 8C), Die Streulichtminimierung kann somit allein durch die geeignete Materialwahl und die fugenlose Anordnung des strahlformenden Elementes 12 in der Aufnahme 18 des Trägers 14 oder in Ergänzung zu Lichtfallen erzielt werden.

Um die spezifische Materialauswahl sowie die erforderliche fugenlose Anordnung des strahlformenden Elements 12 am Träger 14 zu ermöglichen, kann das optische Gerät 10 vorteilhaft durch Spritzgießen realisiert werden. Das Spritzgießen ermöglicht es, zwei Materialien, insbesondere Kunststoffe, so miteinander zu verbinden, dass die Verbindung fugenlos und in der Regel unlösbar ist. Spritzgießen, bei dem mindestens zwei Werkstoffe (Materialien) zu einem einstückigen Bauteil verbunden werden, wird auch als Zwei- oder Mehrkomponenten-Spritzgießen bezeichnet. Es gibt verschiedene Zweikomponenten-Spritzgießverfahren, die angewendet werden können. Dazu gehören das Kaskadenspritzgießen und das Sandwichspritzgießen. Beim Kaskadenspritzgießen wird eine erste Komponente in das Spritzgießwerkzeug eingespritzt und anschließend eine zweite Komponente auf die erste Komponente aufgespritzt. Die Form ist in der Regel so ausgelegt, dass die zweite Komponente in die Hohlräume der ersten Komponente fließt und eine feste Verbindung bildet. Beim Sandwich-Spritzgießen werden zwei Komponenten gleichzeitig in die Form eingespritzt, wobei eine Komponente die andere umschließt.

Das strahlformende Element 12 kann eine Komponente sein und der Träger 14 die andere Komponente. Dabei ist es unerheblich, welche Komponente die erste und welche die zweite ist. Je nach gewünschter Anwendung und gefordertem Aufbau des optischen Geräts 10 kann somit beim Spritzgießen entweder das strahlformende Element 12 auf den Träger 14 aufgespritzt werden oder umgekehrt. Vorteilhaft ist es, wenn zuerst das strahlformende Element 12 (Linse) und dann der umhüllende Tubus 14 gespritzt wird, weil in diesem Fall der Tubus beim Abkühlen auf die Linse schrumpft.

Darüber hinaus wird auch die zur Erzielung des gewünschten Effekts erforderliche Materialauswahl durch den Einsatz eines Spritzgießverfahrens begünstigt, da ein Mehrkomponenten-Spritzgießverfahren grundsätzlich für den Einsatz unterschiedlicher Materialien ausgelegt ist. Das Ausgangsmaterial für das strahlformende Element 12 und den Träger 14 ist vorzugsweise das gleiche Material, insbesondere ein Kunststoff wie Polycarbonat oder PMMA. Um das erforderliche Absorptionsvermögen des zweiten Materials einzustellen, kann das gemeinsame Ausgangsmaterial für den Träger 14 mit Pigmenten versehen werden, um einen hohen Absorptionsgrad für elektromagnetische Strahlung einzustellen. Gleichzeitig bleibt bei dieser Modifikation des Ausgangsmaterials der Brechungsindex unverändert, so dass das erste und das zweite Material einen im Wesentlichen identischen Brechungsindex aufweisen. Das Ausgangsmaterial (erstes Material) und das modifizierte Ausgangsmaterial (zweites Material) können dann in an sich bekannter Weise zu einem einstückigen Bauteil mit der oben beschriebenen Struktur und den genannten Materialeigenschaften spritzgegossen werden.

Die Verwendung eines einheitlichen Ausgangsmaterials hat zudem den Vorteil, dass Temperatureinflüsse gleichmäßig auf beide Komponenten wirken und somit Spannungen zwischen den einzelnen Komponenten, hier dem strahlformenden Element 12 und dem Träger 14, vorteilhaft vermieden werden können.

Fig. 3 zeigt das optische Gerät gemäß dem Ausführungsbeispiel nach Fig. 2 mit einem aktiven optoelektronischen Element 16`.

Das optische Gerät 10 gemäß Fig. 3 entspricht hinsichtlich des strahlformenden Elements 22 und des Trägers 14 dem optischen Gerät 10 gemäß Fig. 2. Die Ausführungsformen unterscheiden sich hier lediglich hinsichtlich des optoelektronischen Elements 16`, das in der vorliegenden Ausführungsform ein aktives Element ist. Das aktive Element 16' ist dazu ausgebildet, elektromagnetische Strahlung auszusenden und in das strahlformende Element 12 einzukoppeln, wobei ein Großteil der durch das optoelektronische Element 16' eingekoppelten Strahlung durch das strahlformende Element 12 hindurch propagiert und über die Deckfläche 22 nach außen abgestrahlt wird. Ein Teil der Strahlung kann jedoch auch hier, beispielhaft dargestellt durch den Lichtstrahl 36, auf die Kontaktfläche 26 zwischen dem strahlformenden Element 22 und dem Träger 14 auftreffen. Auch diese Strahlung wird entsprechend der besonderen Ausgestaltung des Trägers 14 und des strahlformenden Elements 12 von dem Träger 14 möglichst vollständig absorbiert, so dass keine oder nur eine geringe Reflexion, wie hier durch den Strahl 38 angedeutet ist, stattfindet.

Vorteilhafterweise kann durch die beschriebene Struktur somit auch eine Abstrahlcharakteristik des optischen Geräts 10 verbessert werden. Es versteht sich, dass die in Fig. 2 und die in Fig. 3 dargestellten Ausführungen auch kombiniert werden können. Beispielsweise besitzt ein so genanntes Transceiver-Lichtgitter auf jeder Lichtgitterseite eine Vielzahl von optoelektronischen Elementen, die abwechselnd einen Sender oder einen Empfänger beinhalten.

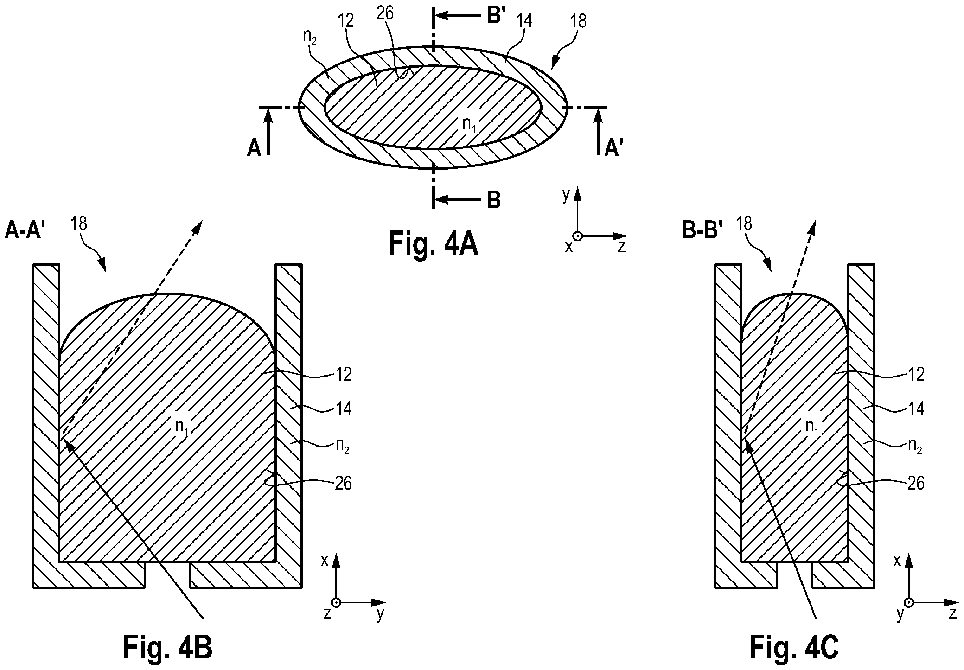

Fig. 4A, 4B und 4C zeigen jeweils in einer schematischen Darstellung eine weitere Variante des Ausführungsbeispiels gemäß Fig. 2 aus verschiedenen Perspektiven.

Fig. 4A zeigt eine Draufsicht in x-Richtung, Fig. 4B und 4C jeweils Schnittansicht in z Richtung und in y-Richtung, wie aus den dargestellten Bezugssystemen und den Schnittlinien ersichtlich. Gleiche Bezugszeichen bezeichnen gleiche Teile wie vorstehend in Bezug auf Fig. 2.

Das strahlformende Element sowie die Aufnahme 18 des Trägers 14 sind in dieser Ausgestaltung im Querschnitt oval ausgebildet, d.h. das strahlformende Element 12 weist in y-Richtung eine kleinere Ausdehnung auf als in z-Richtung. Die Aufnahme 18 des Trägers 14 umschließt das strahlformende Element in dieser Ansicht ringförmig. Eine Wandstärke der Aufnahme 18 ist im Verhältnis zur Breite sowie zur Länge des strahlformenden Elements 12 gering. Die Wandstärke kann je nach Anwendungsfall oder Herstellungsverfahren homogen oder inhomogen sein, insbesondere mit Strukturen ausgebildet sein, die als Lichtfalle fungieren (siehe Fig. 8C). Der Aufbau des in den Fig. 4A, 4B und 4C dargestellten optischen Geräts ist vorteilhaft, da die Form aufgrund der reduzierten Wandstärke dünn und damit für das Spritzgussverfahren günstig ist.

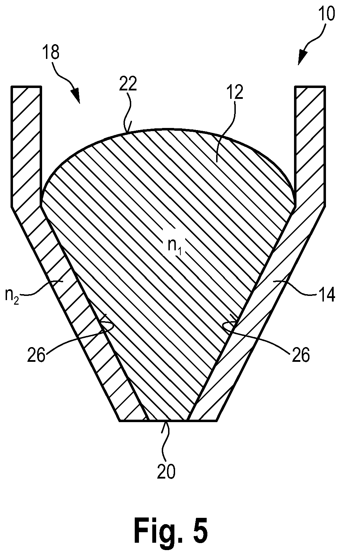

Fig. 5 zeigt in einer Querschnittsansicht eine weitere Variante des Ausführungsbeispiels gemäß Fig. 2 in einer Seitenansicht.

Abweichend von den bisherigen Ausführungsbeispielen ist bei der vorliegenden Ausführungsform gemäß Fig. 5 die Aufnahme 18 des Trägers 14 trichterförmig ausgebildet. Eine Öffnungsweite der Deckfläche 22 des strahlformenden Elements 12 ist daher größer als eine Öffnungsweite der Aufnahme 18 auf der Seite der Grundfläche 20. Eine trichterförmige Ausführung ist bei Geräten aus dem Stand der Technik in der Regel unerwünscht, da bei dieser Form gerade an den Innenflächen der Aufnahme 18 Licht zu dem optoelektronischen Element reflektiert und gestreut werden kann. Aufgrund der vorgegebenen Gestaltung des strahlformenden Elementes 12 und des Trägers 14, d.h. der Materialauswahl und der Materialverbindung, findet in diesem Fall jedoch an den Kontaktflächen 26 keine oder nur eine geringe Streuung bzw. Reflexion statt, so dass die beschriebenen Vorteile besonders zur Geltung kommen.

Eine trichterförmige Ausgestaltung erleichtert in vielen Fällen das Herauslösen eines Spritzgussteils aus einer Spritzgussform und kann daher wünschenswert sein, Darüber hinaus hat die trichterförmige Ausgestaltung den Vorteil, dass das Volumen des strahlformenden Elements 12 verringert werden kann und so ein Auftreten von Lunkern vorteilhaft reduziert werden kann. Außerdem kann durch das kleinere Volumen Material für das strahlformende Element 12 eingespart werden.

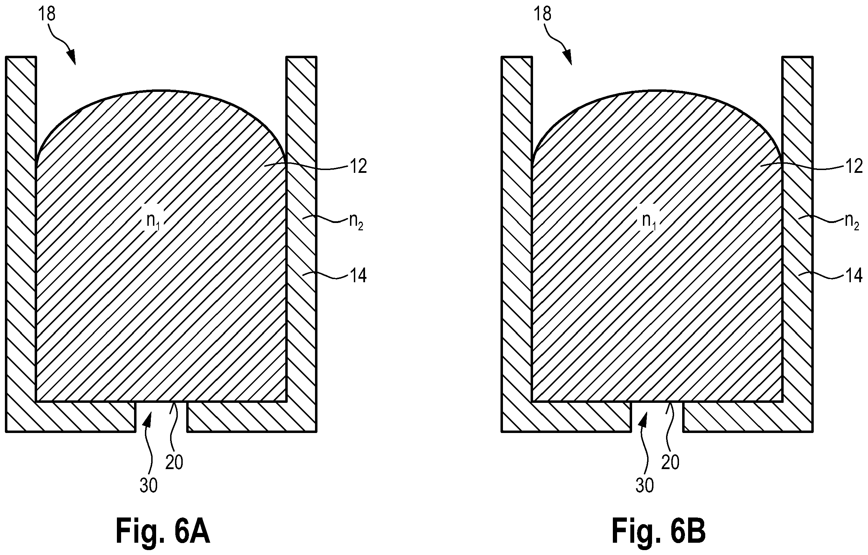

Fig. 6A und 6B zeigen in einer Querschnittsansicht zwei weitere Variante des Ausführungsbeispiels gemäß Fig. 2 in einer Seitenansicht.

Wie bereits zu den Fig. 2 und 3 beschrieben, kann die Aufnahme 18 des Trägers 14 an der Grundfläche 20 eine Öffnung 30 aufweisen, die beispielsweise als optische Blende dient. Die Öffnung 30 kann dabei auf unterschiedliche Weise ausgebildet sein. Zum einen kann die Öffnung 30, wie in Figur 6A gezeigt, offen gelassen werden, während in Figur 6B die Öffnung 30 mit dem Material (erstes Material) des strahlformenden Elements 12 ausgefüllt ist. Beide Varianten können je nach Anwendungsfall oder Herstellungsverfahren vorteilhaft sein und sind gleichermaßen im Spritzgussverfahren realisierbar. Die letztgenannte Variante eignet sich jedoch besonders für das Spritzgussverfahren, um eine gute Verbindung zwischen dem Träger 14 und dem strahlformenden Element 12 zu erreichen.

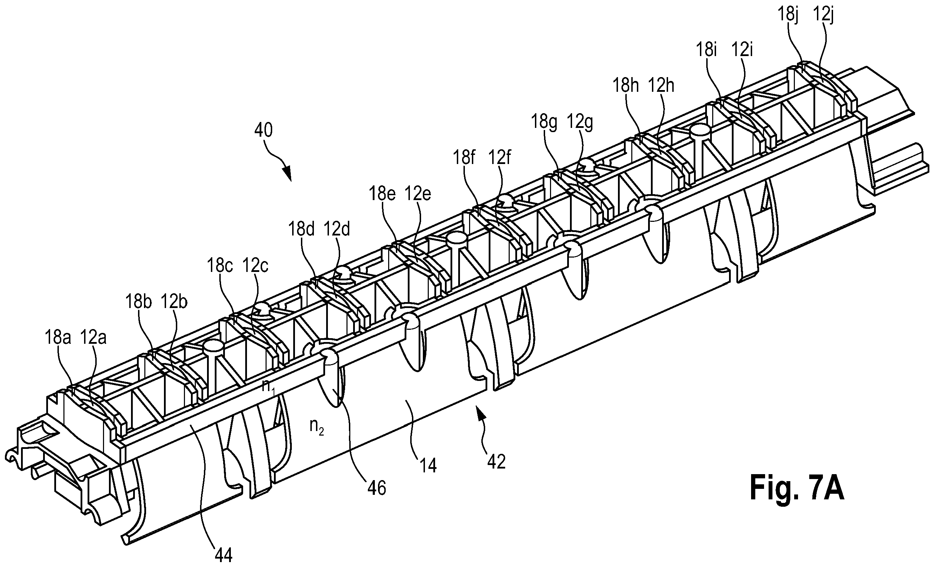

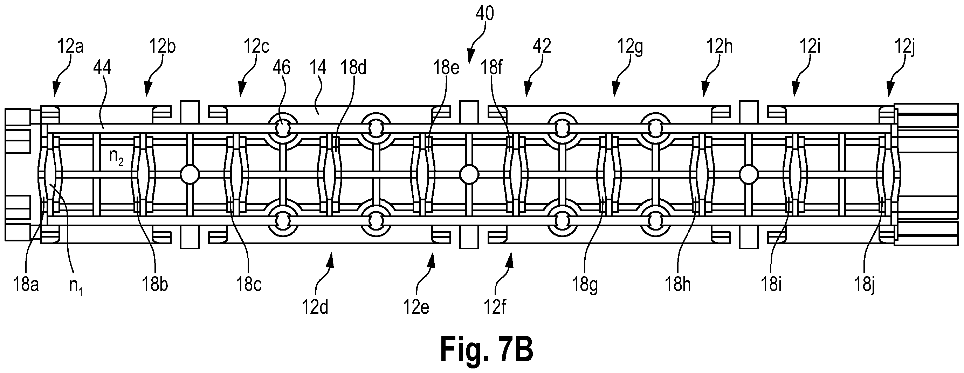

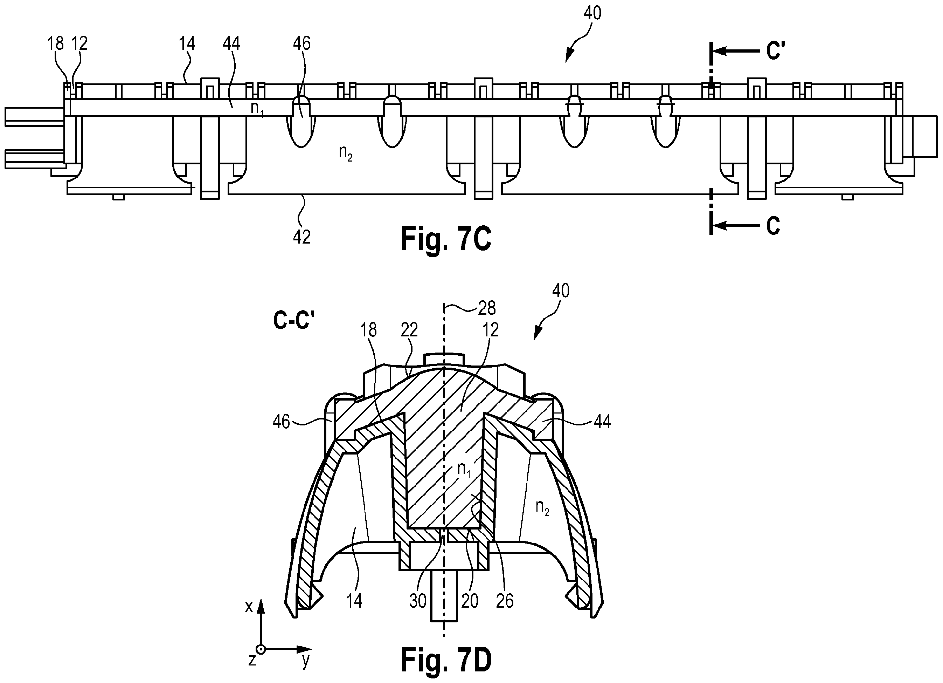

Fig. 7A zeigt ein Anwendungsbeispiel für ein optisches Gerät der vorliegenden Offenbarung in einer perspektivischen Ansicht. Fig. 7B zeigt das Anwendungsbeispiel nach Fig. 7A in einer Draufsicht, Fig. 7C in einer Seitenansicht und Fig. 7D in einer Querschnittsansicht entlang der Linie C-C` aus Fig. 7C.

Der Anwendungsfall bezieht sich auf ein Lichtgitter 40, dessen Grundkörper 42 in den Fig. 7A bis 7D dargestellt ist. Der Grundkörper 42 ist ein einstückiges Bauteil, das im Spritzgussverfahren aus zwei Komponenten gebildet wird. Die erste Komponente ist der Träger 14 und die zweite Komponente ist das strahlformende Element 12. Genauer gesagt weist die zweite Komponente hier zehn strahlformende Elemente 12a bis 12j auf, die jeweils in eine entsprechende Aufnahme 18a bis 18i des Trägers 14 eingefasst sind. Das Trägermaterial (zweites Material) und das Material des strahlformenden Elements 12 (erstes Material) sind wie oben beschrieben so gewählt, dass Reflexionen und Brechungen in der Aufnahme 18 vermieden bzw. verringert werden.

Der Träger 14 kann zusätzlich zu den Aufnahmen 18a bis 18j als Grundgerüst für das Lichtgitter 40 dienen. Die strahlformenden Elemente 12a bis 12j können zudem weitere Strukturen aufweisen, beispielsweise Verbindungsstege 44 zwischen den strahlformenden Elementen sowie gegebenenfalls weitere Lichtleiter 46 für anderweitige Aufgaben. Weitere Komponenten, die bei einem Lichtgitter vorhanden sind, wie zum Beispiel Statusanzeigen in Form von LEDs, können somit vorteilhaft bereits durch das einstückige Bauteil zusammen mit dem Träger 14 und dem strahlformenden Element 12 realisiert werden. Auf diese Weise lässt sich das Lichtgitter 40 besonders günstig realisieren. Insbesondere kann ein Montageaufwand deutlich reduziert werden.

Der in Fig. 7D entlang der Linie C-C` der Fig. 7C gezeigte Querschnitt durch das strahlformende Element 12 entspricht den schematischen Darstellungen der Ausführungsbeispiele der vorhergehenden Figuren und zeigt die Kombination der dort jeweils beschriebenen Merkmale. So ist die Aufnahme 18 für das strahlformende Element 12 topfförmig ausgebildet, wobei sich das strahlformende Element 12 stärker in y-Richtung als in z-Richtung erstreckt und somit in z-Richtung möglichst schmal ausgebildet ist. Ferner sind die Seitenwände der Aufnahme 18, an denen die Kontaktfläche 26 zwischen dem Träger 14 und dem strahlformenden Element 12 ausgebildet ist, schräg zur x-Richtung geneigt, die wiederum die optische Achse 28 bildet. Die Aufnahme ist somit leicht trichterförmig mit den oben zu Fig. 5 beschriebenen Vorteilen, insbesondere in Bezug auf das Herauslösen der Aufnahme aus einer Spritzgussform (hier nicht dargestellt). Schließlich ist auf der Seite der Grundfläche 20 des strahlformenden Elements eine Öffnung 30 als optische Blende in der Aufnahme 18 vorgesehen. Auf der gegenüberliegenden Seite (Seite der Deckfläche 22) ist das strahlformende Element hingegen frei von dem Träger 14, wie insbesondere aus der perspektivischen Ansicht gemäß Fig. 7A ersichtlich ist.

Die Herstellung des Grundkörpers 42 für das Lichtgitter 40 kann, wie bereits erwähnt, durch Zweikomponenten-Spritzgießen erfolgen. Das Verfahren beginnt mit der Auswahl des ersten und zweiten Materials für den Träger 14 und für das strahlformende Element 12 bzw. der Vorbereitung eines gemeinsamen Grundmaterials für das erste und zweite Material, beispielsweise durch Einfärben des Grundmaterials. Das erste Material für das strahlformende Element 12 ist für eine definierte elektromagnetische Strahlung (insbesondere das für die Anwendung relevante Licht) durchlässig. Das zweite Material für den Träger ist für diese elektromagnetische Strahlung absorbierend oder wird für diese Strahlung absorbierend gemacht. Beide Materialien haben den gleichen oder in einem Toleranzbereich ähnlichen Brechungsindex in Bezug auf die elektromagnetische Strahlung (n₁ ≈ n₂). Dies wird vorzugsweise durch die Verwendung eines gemeinsamen Ausgangsmaterials erreicht.

Anschließend werden das erste und das zweite Material in eine Spritzgießmaschine gefüllt, die für das Mehrkomponenten-Spritzgießen ausgelegt ist, und der Spritzgießvorgang wird gestartet.

Das erste und das zweite Material werden je nach Verfahren gleichzeitig oder nacheinander in eine Spritzform eingespritzt. Die Spritzform ist eine Negativform des in den Fig. 7A bis 7D dargestellten Grundkörpers 42. Je nach Verfahren kann zunächst der Träger 14 geformt und anschließend das strahlformende Element 12 auf diesen aufgespritzt werden. Es ist jedoch auch denkbar, dass zunächst die Vielzahl der strahlformenden Elemente 12a bis 12j einschließlich der Verbindungsstege 44 und der optionalen Lichtleiter 46 geformt wird und anschließend diese Struktur mit dem Trägermaterial umspritzt wird.

Grundsätzlich hängt die Wahl des Spritzgussverfahrens nur von der gewünschten Form des Grundkörpers ab, solange zwischen dem strahlformenden Element 12 und dem Träger 14 die gemeinsame Kontaktfläche 26 in der Aufnahme 18 fugenlos ausgebildet ist, so dass die genannten optischen Eigenschaften, insbesondere die Absorption von Streulicht durch den Träger 14, eintreten können.

Der nach dem Spritzgießen vorliegende Grundkörper 42 umfasst zumindest den Träger 14 und die strahlformenden Elemente 12. Für ein funktionsfähiges Lichtgitter müssen im Wesentlichen nur noch eine Elektronik mit den optoelektronischen Elementen und externen Anschlüssen sowie ein umschließendes Gehäuse ergänzt werden. Gegenüber einem konventionellen Lichtgitter, bei dem für Träger und strahlformende Elemente separate Komponenten verwendet werden, können der Montageaufwand und die damit verbundenen Fertigungskosten deutlich reduziert werden.

Die Figs. 8A bis 8C zeigen Varianten eines optischen Gerätes 10 der vorstehend beschriebenen Art mit zusätzlichen Lichtfallen 50a, 50b bzw. 50c im Inneren des Trägers 14.

Der Schutzumfang der vorliegenden Erfindung wird durch die folgenden Ansprüche bestimmt und ist nicht durch die in der Beschreibung erläuterten oder in den Figuren dargestellten Merkmale begrenzt.

## Patentansprüche

1. Optisches Gerät (10), insbesondere Sicherheitslichtschranke oder Sicherheitslaserscanner, aufweisend:
ein strahlformendes Element (12) aus einem ersten Material mit einer Grundfläche (20) und einer Deckfläche (22), die einander gegenüberliegen, sowie mit einer umgebenden Mantelfläche (24), die die Grundfläche (20) und die Deckfläche (22) miteinander verbindet;
einen Träger (14) aus einem zweiten Material, der mit einer Aufnahme (18) für das strahlformende Element (18) ausgebildet ist und mindestens eine gemeinsame Kontaktfläche (26) mit der Mantelfläche (24) des strahlformenden Elements (12) aufweist,
wobei an der Kontaktfläche (26) zwischen dem strahlformenden Element (12) und dem Träger (14) das erste Material und das zweite Material unmittelbar aneinander anliegen,
wobei das erste Material für eine definierte elektromagnetische Strahlung durchlässig ist und das zweite Material für die definierte elektromagnetische Strahlung absorbierend ist,
wobei das erste Material und das zweite Material bezogen auf die definierte elektromagnetische Strahlung jeweils einen definierten Brechungsindex (n₁, n₂) aufweisen, und
wobei der definierte Brechungsindex (n₂) des zweiten Materials in einem definierten Verhältnis zu dem definierten Brechungsindex (n₁) des ersten Materials eingestellt ist, um an der Kontaktfläche (26) eine spezifische Übergangscharakteristik für die definierte elektromagnetische Strahlung einzustellen.

2. Optisches Gerät nach Anspruch 1, wobei das definierte Verhältnis n₁/n₂ zwischen 0,9 und 1,1, vorzugsweise zwischen 0,95 und 1,05, insbesondere 1 ist.

3. Optisches Gerät nach Anspruch 1 oder 2, wobei die spezifische Übergangscharakteristik bewirkt, dass die Kontaktfläche (26) reflexions- und brechungsarm, insbesondere reflexions- und brechungsfrei für die durch die Grund- und Deckfläche (20, 22) eingekoppelte definierte elektromagnetische Strahlung ist.

4. Optisches Gerät nach einem der Ansprüche 1 bis 3, wobei die spezifische Übergangscharakteristik bewirkt, dass die in einem definierten Einfallswinkelbereich durch die Grund- und Deckfläche (20, 22) eingekoppelte definierte elektromagnetische Strahlung ab der Kontaktfläche (26) von dem zweiten Material absorbiert wird.

5. Optisches Gerät nach einem der Ansprüche 1 bis 4, wobei das erste Material ein erster transparenter Kunststoff und das zweite Material ein zweiter eingefärbter, insbesondere schwarzer, Kunststoff ist, der die definierte elektromagnetische Strahlung absorbiert.

6. Optisches Gerät nach Anspruch 5, wobei der erste transparente Kunststoff und der zweite eingefärbte Kunststoff jeweils Polycarbonat, Polymethylmethacrylat (PMMA), Cycloolefin-Copolymere, optische Polyester oder Polysulfone aufweisen.

7. Optisches Gerät nach einem der Ansprüche 1 bis 6, wobei das strahlformende Element (12) und der Träger (14) ein integral verbundenes Bauteil sind.

8. Optisches Gerät nach einem der Ansprüche 1 bis 7, wobei die Aufnahme (18) trichterförmig und in einer Richtung von der Deckfläche (22) zu der Grundfläche (20) verjüngt ausgebildet ist.

9. Optisches Gerät nach einem der Ansprüche 1 bis 8, wobei die Aufnahme (18) zumindest einen Teil der Grundfläche (20) mit zumindest einer Öffnung (30) für die definierte elektromagnetische Strahlung umschließt, wobei die Öffnung (30) als Blende für ein optoelektronisches Element (16) im Strahlengang ausgebildet ist.

10. Optisches Gerät nach Anspruch 9, wobei die Öffnung (30) mit dem ersten Material des strahlformenden Elements (12) ausgefüllt ist.

11. Optisches Gerät nach einem der Ansprüche 1 bis 10, wobei die Aufnahme (18) einen über die Deckfläche (22) hervorstehenden Tubus bildet..

12. Optisches Gerät nach einem der Ansprüche 1 bis 11, wobei in der Aufnahme (18) vorspringende Strukturen ausgebildet sind, die als Lichtfallen fungieren.

13. Optisches Gerät nach einem der Ansprüche 1 bis 12, wobei das optische Gerät eine Vielzahl von strahlformenden Elementen (12a-12j) aufweist, für die jeweils eine eigene Aufnahme (18a-18j) in dem Träger (14) ausgebildet ist.

14. Herstellungsverfahren für ein optisches Gerät (10) mit einem strahlformenden Element (12) und einem Träger (14), das Verfahren weist folgende Schritte auf:
- Bereitstellen eines ersten Materials für das strahlformende Element (12), das für eine definierte elektromagnetische Strahlung durchlässig ist und bezogen auf die definierte elektromagnetische Strahlung einen ersten definierten Brechungsindex (n₁) aufweist;
- Bereitstellen eines zweiten Materials für den Träger (14), das für die definierte elektromagnetische Strahlung absorbierend ist und bezogen auf die definierte elektromagnetische Strahlung einen zweiten definierten Brechungsindex (n₂) aufweist;
- Herstellen des strahlformenden Elements (12) aus dem ersten Material und des Trägers (14) aus dem zweiten Material;
- Zusammenfügen des strahlformenden Elements (12) und des Trägers (14) zu einem integral verbundenen Bauteil aus dem ersten Material und dem zweiten Material,
wobei das strahlformende Element (12) eine Grundfläche (20) und eine Deckfläche (22), die einander gegenüberliegen, sowie eine umgebende Mantelfläche (24), die die Grundfläche (20) und die Deckfläche (22) miteinander verbindet, aufweist, wobei der Träger (14) mit einer Aufnahme (18) für das strahlformende Element (12) ausgebildet ist und mindestens eine gemeinsame Kontaktfläche (26) mit der umgebenden Mantelfläche (24) des strahlformenden Elements (12) aufweist,
wobei der zweite definierte Brechungsindex (n₂) des zweiten Materials in einem definierten Verhältnis zu dem ersten definierten Brechungsindex (n₁) des ersten Materials eingestellt ist, um an der Kontaktfläche (26) eine spezifische Übergangscharakteristik für die definierte elektromagnetische Strahlung einzustellen.

15. Herstellungsverfahren nach Anspruch 14, wobei das Herstellen und Zusammenfügen ein Spritzgießen beinhaltet, insbesondere ein Mehrkomponenten-Spritzgießen.
